# EUROPÄISCHE PATENTSCHRIFT

(11) **EP 0 696 684 B1**
(45) Veröffentlichungstag und Bekanntmachung des Hinweises auf die Patenterteilung: **10.06.1998**
(21) Anmeldenummer: 95112282.9
(22) Anmeldetag: 04.08.1995
(51) Int. Cl.: F16B 7/04

(54) **Verbindungsvorrichtung**
Connecting device
Dispositif de fixation

(30) Priorität: 08.08.1994 DE 9412773 U
(43) Veröffentlichungstag der Anmeldung: 14.02.1996
(73) Patentinhaber: EXPO MART INC., New York, NY 100177 (US)
(72) Erfinder: Martens, Christian, D-51865 Köln (DE)
(74) Vertreter: Berkenfeld, Helmut, Dipl.-Ing.

(56) Entgegenhaltungen:
- DE-A- 4 119 326
- DE-U- 9 304 538

## Beschreibung

Die Erfindung betrifft eine Verbindungsvorrichtung mit einer ersten und mit einer zweiten Profilstange, von denen eine hinterschnittene Längsnuten und die andere einen Längs-Hohlraum zur Aufnahme der Verbindungsvorrichtung aufweist, wobei
die Verbindungsvorrichtung in einen Längs-Hohlraum der zweiten Profilstange einführbar ist,
die Verbindungsvorrichtung einen in ihr hin- und herführbaren Schieber aufweist,
der Schieber einen durch eine Öffnung in der Stirnseite der zweiten Profilstange herausführbaren und im Kupplungsfall in eine Längsnut der ersten Profilstange einsteck- und mit dieser verklemmbaren Kupplungshaken aufweist,
ein Exzenterbolzen mit einem Drehknopf und einer Exzenterplatte in der Verbindungsvorrichtung verdrehbar und axial quer zu dieser verschiebbar gehalten ist,
die Exzenterplatte in einer Ausnehmung im Schieber formschlüssig in Anlage steht und diesen bei Drehen des Drehknopfes zwischen einer ausgeschobenen entkuppelten und einer eingeschobenen gekuppelten Stellung verschiebt, wobei der Kupplungshaken in der eingeschobenen gekuppelten Stellung die erste Profilstange gegen die zweite Profilstange zieht und mit dieser verspannt,
der Exzenterbolzen derart unter einer von dem Schieber ausgeübten Federbelastung steht, daß sein Drehknopf im Kupplungsfall in eine ihn mit der zweiten Profilstange verriegelnde Lage axial nach außen geschoben und in der entkuppelten Lage in eine von außen zugängliche und eine Drehung zulassende Lage nach innen gedrückt wird,
eine Sicherung in der eingeschobenen gekuppelten Stellung des Schiebers eine axiale Bewegung des Exzenterbolzens auf Grund der Federbelastung verhindert,
wobei diese Sicherung eine Öffnung im Boden der Verbindungsvorrichtung unter dem Schaft des Exzenterbolzens und einen in diese hineinragenden und sie teilweise verschließenden Vorsprung aufweist,
und am unteren Ende des Schaftes eine komplementäre Aussparung derart ausgebildet ist, daß sie in der End-Drehstellung des Exzenterbolzens, in der dieser den Schieber in dessen ausgeschobene entkuppelte Stellung drückt, über dem Vorsprung liegt und in der anderen End-Drehstellung des Exzenterbolzens in der dieser den Schieber in dessen eingeschobene gekuppelte Stellung drückt, vom Vorsprung abgelegen ist.

Solche Verbindungsvorrichtungen sind in zahlreichen Ausführungsformen bekannt. Mit ihnen werden Profilstangen zu einem Gestell verbunden. Dieses Gestell bildet dann eine Trennwand oder dient als Displayträger. Diese werden insbesondere auf Messeständen eingesetzt. Bei der Verbindungsvorrichtung der eingangs genannten Gattung (DE-U-93 04 538) besteht die Verbindungsvorrichtung aus den der zweiten Profilstange angeordneten, teilweise verschieb- und teilweise verdrehbaren Elementen. Ein Element ist die Sicherung. Mit dieser wird der Exzenterbolzen in der eingeschobenen Stellung des Schiebers - im Kupplungsfall - an einer Verdrehung gehindert. Diese Sicherung besteht im wesentlichen aus der Öffnung im Boden der Verbindungsvorrichtung unter dem Schaft des Exzenterbolzens und einem in diese hineinragenden und sie teilweise verschließenden Vorsprung und einer am unteren Ende des Schaftes derart ausgebildeten komplementären Aussparung, daß sie in der End-Drehstellung des Exzenterbolzens, in der dieser den Schieber in dessen ausgeschobene entkuppelte Stellung drückt, über dem Vorsprung liegt und in der anderen End-Drehstellung des Exzenterbolzens, in der dieser den Schieber in dessen eingeschobene gekuppelte Stellung drückt, vom Vorsprung abgelegen ist.

Damit wird erreicht, daß sich der Exzenterbolzen in der eingeschobenen gekuppelten Stellung des Schiebers nicht quer zur Verbindungsvorrichung in diese hineindrücken läßt und sich dabei aus seiner diese mit der zweiten Profilstange verriegelnden Lage löst. Wichtig ist weiter, daß auch der Schieber im Kupplungsfall festgelegt und an einer solchen Querbewegung in die Verbindungsvorrichtung hinein gehindert wird. Dann wird das vordere aus dem Gehäuse der Verbindungsvorrichtung herausragende und den Kupplungshaken aufweisende Ende gesichert. Der Kupplungshaken verbleibt in seiner die erste Profilstange erfassenden und damit die beiden Profilstangen miteinander verspannenden Lage.

Der Erfindung liegt die Aufgabe zu Grunde, den Schieber im Kupplungsfall in Querrichtung festzulegen. Die Lösung für diese Aufgabe ergibt sich bei einer Verbindungsvorrichtung der eingangs genannten Gattung nach der Erfindung dadurch, daß der Schieber ein bügelförmiges einen radialen Vorsprung des Exzenterbolzen umfassendes Ende aufweist. Damit sind Schieber und Exzenterbolzen formschlüssig miteinander verbunden. Dieser wir durch die vorstehend genannte Sicherung an einer Querbewegung gehindert. Durch die erfindungsgemäße formschlüssige Verbindung zwischen Exzenterbolzen und Schieber wird auch dieser an einer Querbewegung gehindert und in seiner eingeschobenen kuppelnden Stellung gesichert.

In einer zweckmäßigen Ausgestaltung weist der Exzenterbolzen eine Exzenterscheibe auf, die von dem bügelförmigen Ende des Schiebers umfasst wird.

Zweckmäßig weist das bügelförmige Ende einen unteren und einen oberen Schenkel und einen diese verbindenden Steg auf, die die Exzenterscheibe umschließen.

Der obere Schenkel weist etwa auf der Hälfte seiner Länge eine Aussparung auf. Beim Zusammenbau der Verbindungsvorrichtung erleichtert diese den Einbau des Exzenterbolzens und des Schiebers.

Vorteilhaft ist noch die Anordnung einer Führungsbuchse auf dem Boden des Gehäuses der Verbindungsvorrichtung, die den Schaft des Exzenterbolzens umschließt.

Am Beispiel der in der Zeichnung gezeigten Ausführungsform wird die Verbindungsvorrichtung nun weiter beschrieben. In der Zeichnung ist
- Figur 1: ein Längsschnitt durch die Verbindungsvorrichtung, auch entlang der Schnittlinie I-I in Figur 3, in der ausgeschobenen entkuppelten Lage des Schiebers,
- Figur 2: eine Aufsicht auf den Boden der Verbindungsvorrich tung, teilweise im Schnitt entlang der Schnittlinie II-II in Figur 1,
- Figur 3: ein Querschnitt durch den Schaft des Exzenterbolzens entlang der Schnittlinie III-III in Figur 1,
- Figur 4: ein Längsschnitt durch die Verbindungsvorrichtung ähnlich Figur 1, jedoch in der eingeschobenen kuppelnden Lage des Schiebers,
- Figur 5: eine Aufsicht auf den Boden der Verbindungsvorrich tung ähnlich Figur 2, jedoch in der eingeschobenen kuppelnden Lage des Schiebers,
- Figur 6: ein Querschnitt durch den Schaft des Exzenterbolzens entlang der Schnittlinie VI-VI in Figur 4,
und
- Figur 7: eine auseinandergezogene perspektivische Darstellung der beiden Profilstangen und der erfindungsgemäßen Verbindungsvorrichtung.

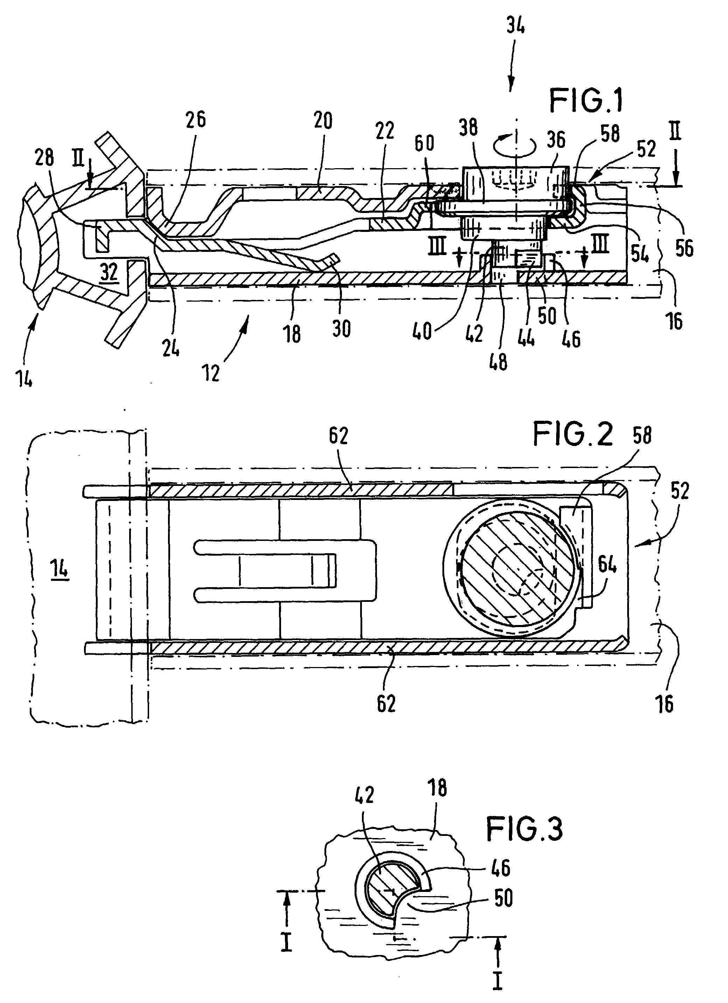

Die Figuren zeigen die Verbindungsvorrichtung 12 mit der ersten Profilstange 14 und der zweiten Profilstange 16. Die erste Profilstange 14 wird im Quer- und die zweite Profilstange 16 wird im Längsschnitt gezeigt. Die Verbindungsvorrichtung 12 ist in die letztere eingeschoben. Die Verbindungsvorrichtung 12 oder deren Gehäuse weisen einen Boden 18 und einen Deckel 20 auf. Der Schieber 22 befindet sich im Gehäuse. An seinem vorderen in Figur 1 links liegenden Ende weist er eine Schrägschulter 24 auf. Diese liegt an einer Schrägschulter 26 des Deckels 20 an. Der Schieber 22 läuft in einen Kupplungshaken 28 aus. Dieser ragt bei Blick auf Figur 1 links aus dem Gehäuse heraus. Aus dem Schieber 22 ist eine Lasche ausgeschnitten und nach unten abgebogen. Diese bildet eine auf dem Boden 18 aufliegende Feder 30. In der ersten Profilstange 14 befindet sich noch eine den Kupplungshaken 28 aufnehmende Längnut 32. Der Exzenterbolzen 34 enthält einen Drehknopf 36 mit einem Innensechskant, eine Exzenterscheibe 38, eine Exzenterplatte 40 und einen Schaft 42. Dieser weist an seinem unteren Ende eine Aussparung 44 auf. Eine auf dem Boden 18 angeordnete Führungsbuchse 46 umschließt den Schaft 42. Im Boden 18 selbst befindet sich eine Öffnung 48. In diese ragt ein Vorsprung 50. Dieser ist komplementär zu der Aussparung 44 ausgebildet. Der Schieber 22 weist ein bügelförmiges Ende 52 auf. Dieses besteht aus einem unteren Schenkel 54, einem Steg 56 und einem oberen Schenkel 58. Diese umschließen die Exzenterscheibe 38 und liegen an dieser an. Die Figuren 1 und 2 zeigen weiter, daß der Schieber 22 im Bereich der Exzenterplatte 40 ausgenommen ist und an dieser formschlüssig anliegt. Figur 1 zeigt weiter, daß der Schieber 22 bei Blick auf diese Figur links vor dieser Ausnehmung eine hochgezogene Lasche 60 aufweist. Diese endet in der Ebene der Exzenterscheibe 38. Figur 2 zeigt die Seitenwände 62 des Gehäuses. Nach der Darstellung in Figur 2 weist der obere Schenkel 58 des bügelförmigen Endes 52 des Schiebers 22 eine Ausnehmung 64 auf.

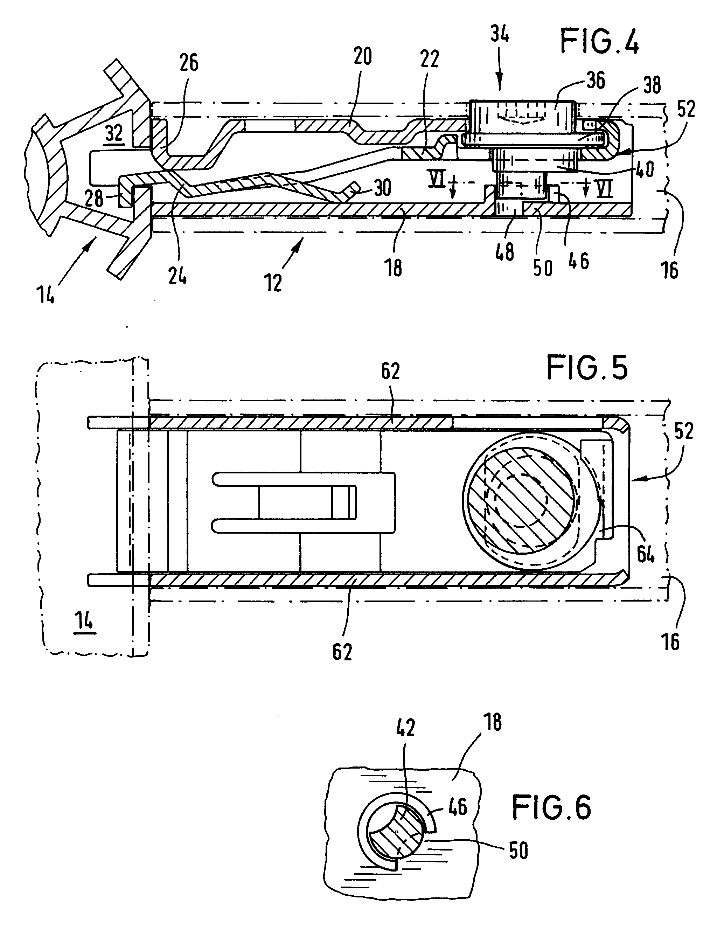

Die vorstehende Beschreibung gilt sowohl für die Figuren 1 - 3 wie auch für die Figuren 4 - 6.

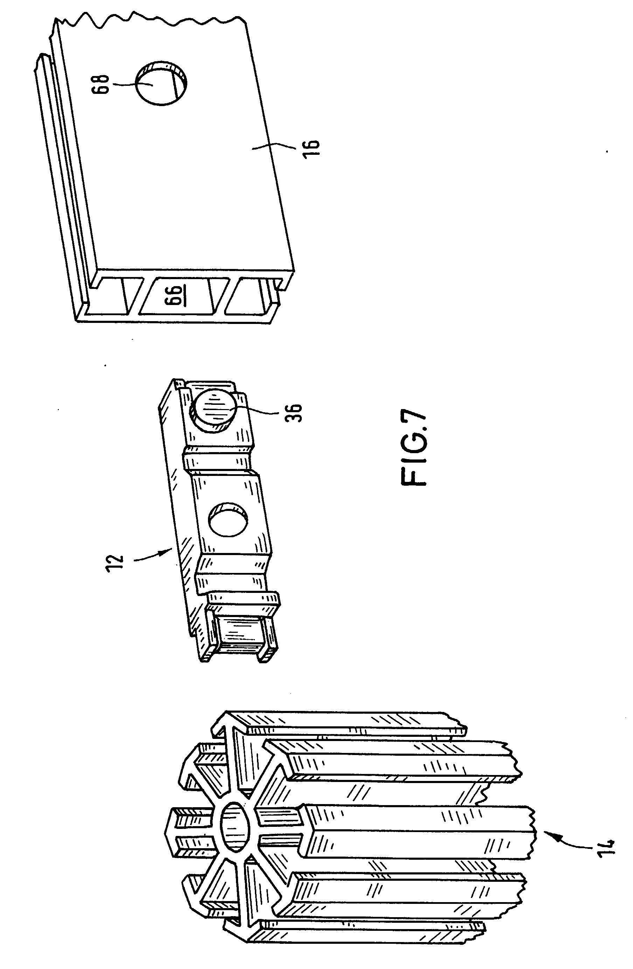

Figur 7 zeigt deutlich die erste Profilstange 14, die zweite Profilstange 16 und die diese zusammenhaltende und miteinander verspannende erfindungsgemäße Verbindungsvorrichtung 12. Die zweite Profilstange 16 weist drei Längs-Hohlräume auf. Die Verbindungsvorrichtung 12 wird in den mittleren Längs-Hohlraum eingeschoben. Dabei rastet der Drehknopf 36 in eine Querbohrung 68. ein. Dadurch wird die zweite Profilstange 16 mit der Verbindungsvorrichtung 12 verbunden.

Bei Gebrauch wird die Verbindungsvorrichtung 12 in ihrer in den Figuren 1 - 3 gezeigten Lage zuerst in den mittleren Längs-Hohlraum 66 der zweiten Profilstange 16 eingeschoben. Der gesamte Exzenterbolzen 34 und und damit auch der Drehknopf 36 lassen sich dabei quer zum Gehäuse der Verbindungsvorrichtung 12 eindrücken. Dabei wird die Feder 30 wirksam. Sie drückt das bügelförmige Ende 52 und damit den gesamten Exzenterbolzen 34 - bei Blick auf Figur 1 - nach oben. Dadurch wird der Drehknopf 36 nach oben gedrückt und rastet in die Querbohrung 68 ein. Weiter wird der Kupplungshaken 28 in eine Längsnut 28 der ersten Profilstange 14 eingelegt. Es ergibt sich das in den Figuren 1 - 3 gezeigte Bild. Die Aussparung 44 im Schaft 42 liegt über dem Vorsprung 50. Damit steht nichts einer Querbewegung des Exzenterbolzens 34 entgegen.

Anschließend werden der Drehknopf 36 mit einem in seinen Innensechskant eingesetzten Schlüssel und damit der gesamte Exzenterbolzen 34 gedreht. Die Exzenterplatte 40 schiebt - bei Blick auf die Figuren - den Schieber 22 nach rechts aus seiner in Figur 1 gezeigten Lage in seine in Figur 4 gezeigte Lage. Der Kupplungshaken 28 hintergreift die Längsnut 32 und preßt die erste Profilstange 14 an die Verbindungsvorrichtung 12. Die Feder 30 drückt den Exzenterbolzen 34 weiter nach außen - bei Blick auf die Figuren in Querrichtung nach oben -. Nach der Drehung des Exzenterbolzens 34 liegt nicht mehr die Aussparung 44, sondern das nicht ausgesparte untere Ende des Schaftes 42 über dem Vorsprung 50. Damit kann der Exzenterbolzen 34 nicht mehr quer in die Verbindungsvorrichtung 12 hinein gedrückt werden. Der Drehknopf 36 verbleibt in seiner Lage in der Querbohrung 68 der zweiten Profilstange 16. Beide Profilstangen 14 beziehungsweise 16 sind miteinander verspannt. Auch der Schieber 22 verbleibt infolge der formschlüssigen Verbindung zwischen seinem bügelförmigen Ende 52 und der Exzenterscheibe 38 starr in seiner in den Figuren 4 und 5 gezeigten eingeschobenen kuppelnden Lage.

## Patentansprüche

1. Verbindungsvorrichtung mit einer ersten und mit einer zweiten Profilstange, von denen eine hinterschnittene Längsnuten und die andere einen Längs-Hohlraum zur Aufnahme der Verbindungsvorrichtung aufweist, wobei
die Verbindungsvorrichtung (12) in einen Längs-Hohlraum (66) der zweiten Profilstange (16) einführbar ist,
die Verbindungsvorrichtung (12) einen in ihr hin- und herführbaren Schieber (22) aufweist,
der Schieber (22) einen durch eine Öffnung in der Stirnseite der zweiten Profilstange (16) herausführbaren und im Kupplungsfall in eine Längsnut (32) der ersten Profilstange (14) einsteck- und mit dieser verklemmbaren Kupplungshaken (28) aufweist,
ein Exzenterbolzen (34) mit einem Drehknopf (36) und einer Exzenterplatte (40) in der Verbindungsvorrichtung (12) verdrehbar und axial quer zu dieser verschiebbar gehalten ist,
die Exzenterplatte (40) in einer Ausnehmung im Schieber (22) formschlüssig in Anlage steht und diesen bei Drehen des Drehknopfes (36) zwischen einer ausgeschobenen entkuppelten und einer eingeschobenen gekuppelten Stellung verschiebt, wobei der Kupplungshaken (28) in der eingeschobenen gekuppelten Stellung die erste Profilstange (12) gegen die zweite Profilstange (14) zieht und mit dieser verspannt,
der Exzenterbolzen (34) derart unter einer vom Schieber (22) ausgeübten Federbelastung steht, daß sein Drehknopf (36) im Kupplungsfall in eine ihn mit der zweiten Profilstange (16) verriegelnde Lage axial nach außen geschoben und in der entkuppelten Lage in eine von außen zugängliche und eine Drehung zulassende Lage nach innen gedrückt wird,
eine Sicherung in der eingeschobenen gekuppelten Stellung des Schiebers (22) eine axiale Bewegung des Exzenterbolzens (34) auf Grund der Federbelastung verhindert,
wobei diese Sicherung eine Öffnung (48) im Boden (18) der Verbindungsvorrichtung (12) unter dem Schaft (42) des Exzenterbolzens (34) und einen in diese hineinragenden und sie teilweise verschließenden Vorsprung (50) aufweist,
und am unteren Ende des Schaftes (34) eine komplementäre Aussparung (44) derart ausgebildet ist, daß sie in der End-Drehstellung des Exzenterbolzens (34), in der dieser den Schieber (22) in dessen ausgeschobene entkuppelte Stellung drückt, über dem Vorsprung (50) liegt und in der anderen End-Drehstellung des Exzenterbolzens (34), in der dieser den Schieber (22) in dessen eingeschobene gekuppelte Stellung drückt, vom Vorsprung (50) abgelegen ist,
dadurch gekennzeichnet, daß der Schieber (22) ein bügelförmiges einen radialen Vorsprung des Exzenterbolzens (34) umfassendes Ende (52) aufweist.

2. Verbindungsvorrichtung nach Anspruch 1, dadurch gekennzeichnet, daß der Exzenterbolzen (34) eine Exzenterscheibe (38) aufweist und das bügelförmige Ende (52) des Schiebers (22) diese umfasst.

3. Verbindungsvorrichtung nach Anspruch 1 oder 2, dadurch gekennzeichnet, daß das bügelförmige Ende (52) einen unteren Schenkel (54), einen oberen Schenkel (58) und einen diesen verbindenden Steg (56) aufweist und diese die Exzenterscheibe (38) umschließen.

4. Verbindungsvorrichtung nach Anspruch 3, dadurch gekennzeichnet, daß der obere Schenkel (58) auf etwa der Hälfte seiner Länge eine Aussparung aufweist.

5. Verbindungsvorrichtung nach einem der Ansprüche 1 bis 4, dadurch gekennzeichnet, daß auf dem Boden (18) eine den Schaft (42) des Exzenterbolzens (34) umschließende Führungsbuchse (46) angeordnet ist.

## Claims

1. A connecting device having a first shaped bar and a second shaped bar, of which one has longitudinal grooves of an undercut configuration and the other has a longitudinal cavity for receiving the connecting device, wherein
the connecting device (12) can be inserted into a longitudinal cavity (66) in the second shaped bar (16),
the connecting device (12) has a slider (22) which can be moved to and fro therein,
the slider (22) has a coupling hook (28) which can be extended out through an opening in the end of the second shaped bar (16) and which in the coupling situation can be fitted into a longitudinal groove (32) in the first shaped bar (14) and can be clamped thereto,
an eccentric pin (34) having a rotary knob (36) and an eccentric plate (40) is held in the connecting device (12) rotatably and displaceably axially transversely with respect thereto,
the eccentric plate (40) is in positively locking contact in an opening in the slider (22) and upon rotation of the rotary knob (36) displaces the slider between an extended uncoupled position and a retracted coupled position, wherein in the retracted coupled position the coupling hook (28) pulls the first shaped bar (12) against the second shaped bar (14) and braces the former to the latter,
the eccentric pin (34) is subjected to a spring loading exerted by the slider (22), in such a way that in the coupling situation its rotary knob (36) is pushed axially outwardly into a position of locking it to the second shaped bar (16) and in the uncoupled position it is urged inwardly into a position in which it is accessible from the outside and it permits a rotary movement,
a securing means in the retracted coupled position of the slider (22) prevents axial movement of the eccentric pin (34) due to the spring loading, wherein said securing means has an aperture (48) in the bottom (18) of the connecting device (12) under the shank portion (42) of the eccentric pin (34) and a projection (50) which extends into the aperture and partially closes same,
and a complementary recess (44) is provided at the lower end of the shank portion (42) in such a way that in the limit rotational position of the eccentric pin (34) in which the latter urges the slider (22) into the extended uncoupled position thereof the recess (44) is disposed above the projection (50) and in the other limit rotational position of the eccentric pin (34) in which it urges the slider (22) into the retracted coupled position thereof the recess is away from the projection (50),
characterised in that the slider (22) has a stirrup-shaped end (52) embracing a radial projection on the eccentric pin (34).

2. A connecting device according to claim 1 characterised in that the eccentric pin (34) has an eccentric disc (38) and the stirrup-shaped end (52) of the slider (22) embraces the eccentric disc.

3. A connecting device according to claim 1 or claim 2 characterised in that the stirrup-shaped end (52) has a lower limb (54), an upper limb (58) and a web (56) connecting the lower and upper limbs and they enclose the eccentric disc (38).

4. A connecting device according to claim 3 characterised in that the upper limb (58) has a recess over approximately half its length.

5. A connecting device according to one of claims 1 to 4 characterised in that arranged on the bottom (18) is a guide sleeve (46) which encloses the shank portion (42) of the eccentric pin (34).

## Revendications

1. Dispositif de raccordement comprenant une première barre profilée et une deuxième barre profilée dont l'une présente des rainures longitudinales contre-dépouillées et l'autre présente un espace creux longitudinal destiné à recevoir le dispositif de raccordement,
le dispositif de raccordement (12) pouvant être introduit dans un espace creux longitudinal (66) de la deuxième barre profilée (16),
le dispositif de raccordement (12) présentant un coulisseau (22) qui peut être actionné d'un mouvement de va-et-vient dans celui-ci,
le coulisseau (22) présentant un crochet de couplage (28) qui peut être sorti à travers une ouverture prévue dans le front de la deuxième barre profilée (16) et qui, en cas de couplage, peut être introduit dans une rainure longitudinale (32) de la première barre profilée (14) et être coincé avec cette dernière,
un boulon excentrique (34) ayant un bouton tournant (36) et une plaque excentrique (40) étant tenu dans le dispositif de raccordement (12) de manière à pouvoir être tourné et à pouvoir être déplacé axialement transversalement par rapport à celui-ci,
la plaque excentrique (40) étant en appui à engagement positif dans un évidement dans le coulisseau (22) et déplaçant celui-ci, lors de la rotation du bouton tournant (36), entre une position découplée étendue et une position couplée rétractée, le crochet de couplage (28) tirant - dans la position couplée rétractée - la première barre profilée (14) contre la deuxième barre profilée (16) et la coince avec cette dernière,
le boulon excentrique (34) étant soumis à une charge par ressort excercée par le coulisseau (22), d'une telle manière que, en cas de couplage, son bouton tournant (36) est poussé axialement vers l'extérieur dans une position le verrouillant avec la deuxième barre profilée (16) et que, dans la position découplée, il est poussé vers l'intérieur dans une position accessible de dehors et permettant un mouvement rotatif.
un dispositif de sécurité évitant dans la position couplée rétractée du coulisseau (22) un mouvement axial du boulon excentrique (34) en raison de la charge par ressort,
ce dispositif de sécurité présentant une ouverture (48) dans le fond (18) du dispositif de raccordement (12) au-dessous de la tige (42) du boulon excentrique (34), ainsi qu'une projection (50) qui s'étend quelque peu dans cette ouverture et la ferme en partie,
et, au bout inférieur de la tige (34), un évidement complémentaire (44) étant formé de telle manière que, dans la position terminale de rotation du boulon excentrique (34) dans laquelle celui-ci pousse le coulisseau (22) dans sa position découplée étenduée, il est situé au-dessus de la projection (50) et que, dans l'autre position terminale de rotation du boulon excentrique (34) dans laquelle celui-ci pousse le coulisseau (22) dans sa position couplée rétractée, il est écarté de la projection (50),
caractérisé par le fait que le coulisseau (22) présente une extrémité (52) ayant la forme d'une pièce recourbée en arc, qui embrasse une projection radiale du boulon excentrique (34).

2. Dispositif de raccordement selon la revendication 1, caractérisé par le fait que le boulon excentrique (34) présente un disque excentrique (38) et que l'extrémité (52) ayant la forme d'une pièce recourbée en arc du coulisseau (22) embrasse celui-ci.

3. Dispositif de raccordement selon la revendication 1 ou 2, caractérisé par le fait que l'extrémité (52) ayant la forme d'une pièce recourbée en arc présente une branche inférieure (54), une branche supérieure (58) et une traverse (56) reliant ces premières et que celles-ci enferment le disque excentrique (38).

4. Dispositif de raccordement selon la revendication 3, caractérisé par le fait que la branche supérieure (58) présente, à peu près au milieu de sa longueur, un évidement.

5. Dispositif de raccordement selon l'une des revendications 1 à 4, caractérisé par le fait qu'une douille de guidage (46) enfermant la tige (42) du boulon excentrique (34) est disposée sur le fond (18).
